# EUROPEAN PATENT APPLICATION

(11) **EP 4 342 739 A1**
(43) Date of publication of application: **27.03.2024**
(21) Application number: 21940043.9
(22) Date of filing: 16.05.2021
(51) Int. Cl.: B60R 11/04, H04N 5/225, F16M 11/18

(54) **VEHICLE LOGO DEVICE, CONTROL METHOD AND DEVICE FOR VEHICLE LOGO DEVICE, AND TERMINAL**

(71) Applicant: Zhejiang Smart Intelligence Technology Co., Ltd., Ningbo, Zhejiang 315336 (CN)
(72) Inventor: JIANG, Youtao, Hangzhou Bay New District Ningbo, Zhejiang 315336 (CN); LOU, Longhai, Hangzhou Bay New District Ningbo, Zhejiang 315336 (CN); FU, Qiang, Hangzhou Bay New District Ningbo, Zhejiang 315336 (CN); LI, Zhike, Hangzhou Bay New District Ningbo, Zhejiang 315336 (CN); DU, Xinkun, Hangzhou Bay New District Ningbo, Zhejiang 315336 (CN)
(74) Representative: Zaboliene, Reda
(86) International application number: PCT/CN2021/093986
(87) International publication number: WO 2022/241584

(57) **Abstract**

Disclosed are a vehicle logo device, a control method and device for a vehicle logo device, and a terminal. The vehicle logo device comprises: a vehicle logo assembly (1), a camera device (2), a connector (3), a drive device (4), and a control device, wherein the vehicle logo assembly (1) is fixedly connected to the connector (3), and the connector (3) is rotatably connected to a vehicle body; the drive device (4) is configured to drive the connector (3) to rotate, such that the vehicle logo assembly (1) comes in contact with the vehicle body or forms a preset angle with the vehicle body; the camera device (2) is provided on a side face of the vehicle logo assembly (1) close to the vehicle body, and the camera device (2) and the vehicle logo assembly (1) synchronously rotate; the control device is configured to control the drive device (4) to drive the connector (3) to rotate or remain still; and the control device is further configured to control the camera device (2) to work or shut down. The vehicle logo assembly (1) and the camera device (2) are integrated together, and the camera device (2) and the vehicle logo assembly (1) can rotate to switch positions, so that not only is the appearance of a vehicle more aesthetic, but the service life of the camera device (2) is also prolonged.

## Description

### BACKGROUND OF THE APPLICATION

### Field of the Application

The present application relates to the technical field of vehicle logo assembly, in particular to a vehicle logo device, and a control method, device and terminal for the vehicle logo device.

### Description of Related Art

With the popularization and application of LED light source as vehicle lamps, lamps are used more and more maturely in electronic circuits and software, and the compatibility between electronic circuits, software and lamps is stronger and stronger. This enables the trademark logo to also emit light, making it possible to apply projection lights in vehicles.

At present, the trademark logo of motor vehicles adopts surface treatments such as chrome plating and accordingly does not emit light. In addition, with the popularization and application of intelligent vehicles, cameras have become essential equipment and devices, and a vehicle can be provided with one or more cameras. However, currently, the cameras installed on the vehicles are mostly fixed to the vehicle body, that is, perforations are provided on the vehicle body, the cameras are fixed on the inside of the vehicle body, and the lenses are exposed through the perforations. Further, the cameras on some vehicles are fixed to the trademark logo, which disrupts the overall feel of the trademark and affects its appearance.

### BRIEF SUMMARY OF THE APPLICATION

In order to solve the above technical problems and in view of the above issues, the present application discloses a vehicle logo device, wherein the vehicle logo assembly and the camera device of the vehicle are integrated together, and the camera device and the vehicle logo assembly can rotate to switch positions, so that the camera device can be hidden when not in use, not only the appearance of the vehicle is made more beautiful, but also the camera device is avoided from damage by hiding the camera device when there is no need for use, thereby improving the service life of the camera device and increasing the vehicle's sense of technology.

In order to achieve the above object, the present application provides a vehicle logo device, which includes a vehicle logo assembly, a camera device, a connecting member, a driving device, and a control device;
the vehicle logo assembly is fixedly connected to the connecting member, and the connecting member is rotatably connected to a vehicle body;
the driving device is configured to drive the connecting member to rotate, such that the vehicle logo assembly is in contact with the vehicle body or forms a preset angle with the vehicle body;
the camera device is provided on a side surface of the vehicle logo assembly close to the vehicle body, and the camera device rotates synchronously with the vehicle logo assembly;
the control device is configured to control the driving device to drive the connecting member to rotate or keep stationary;
the control device is also configured to control the camera device to start work or shut down.

In one embodiment, when the driving device controls the connecting member to rotate until the vehicle logo assembly is in contact with the vehicle body, the control device controls the camera device to shut down;
when the driving device controls the connecting member to rotate until the vehicle logo assembly forms a preset angle with the vehicle body, the control device controls the camera device to start work.

In one embodiment, the vehicle logo assembly includes a vehicle logo base and a vehicle logo arranged on the vehicle logo base;
the vehicle logo base is fixedly connected to the connecting member;
the driving device is configured to drive the connecting member to rotate, such that the vehicle logo base is in contact with the vehicle body or forms a preset angle with the vehicle body;
the camera device is provided on a side surface of the vehicle logo base close to the vehicle body.

In one embodiment, the vehicle logo base includes an outer side surface and an inner side surface;
the vehicle logo is fixed on the outer side surface of the vehicle logo base;
the camera device is fixed on the inner side surface of the vehicle logo base.

In one embodiment, the vehicle logo includes an LED lamp, a uniform light film covering the LED lamp, and a logo shaped shield covering the uniform light film;
an inner surface of the logo shaped shield is provided with a PVD aluminum plating layer or a silver film.

In one embodiment, the connecting member is a connecting bracket, one end of the connecting bracket is rotatably connected to the vehicle body, and the other end of the connecting bracket is fixedly connected to the vehicle logo assembly.

In one embodiment, the driving device includes a driving motor and a driving rod fixed to the driving motor;
the driving motor drives the connecting member to rotate through the driving rod.
In one embodiment, the preset angle is 10°-45°.

In one embodiment, the control device is also configured to control the vehicle logo assembly to emit light or be turned off.

The specific effects are as follows:
In the vehicle logo device disclosed in this application, the vehicle logo assembly and the camera device of the vehicle are integrated together, and the camera device and the vehicle logo assembly can rotate to switch positions, so that the camera device can be hidden when not in use, not only the appearance of the vehicle is made more beautiful, but also the camera device is avoided from damage by hiding the camera device when there is no need for use, thereby improving the service life of the camera device.

The present application further provides a control method for the vehicle logo device as described above, wherein the method includes:
acquiring the operating mode of a vehicle;
determining whether the operating mode of the vehicle is a first preset mode;
when the operating mode of the vehicle is the first preset mode, controlling the driving device to drive the connecting member to rotate at a preset speed until the connecting member drives the vehicle logo assembly to form a preset angle with the vehicle body, wherein the camera device synchronously forms the preset angle with the vehicle body;
when the camera device forms the preset angle with the vehicle body, controlling the camera device to start work.

In one embodiment, the control method further includes:
when the operating mode of the vehicle is not the first preset mode, controlling the camera device to shut down and controlling the driving device to drive the connecting member to rotate at the preset speed until the connecting member drives the vehicle logo assembly to be in contact with the vehicle body.

In one embodiment, the control method further includes:
when the operating mode of the vehicle is not the first preset mode, controlling the vehicle logo assembly to emit light.

In one embodiment, when the driving device drives the connecting member to rotate at the preset speed, the preset speed is 0.05 mm/s-1 mm/s.

In one embodiment, said acquiring the operating mode of the vehicle includes:
acquiring status data and real-time speed of the vehicle, wherein the status data includes the vehicle being in a started state or the vehicle being in a shutdown state;
determining the operating mode of the vehicle based on the status data and/or the real-time speed of the vehicle.

In one embodiment, the preset angle is 10°-45°.

The specific effects are as follows:
In the control method for the vehicle logo device disclosed in this application, the camera device and the vehicle logo assembly which are integrated together can be rotated automatically to switch positions according to the operating mode of the vehicle. This not only increases the automation level and the intelligence of the vehicle, but also the camera device is avoided from damage by hiding the camera device when there is no need for use, thereby improving the service life of the camera device.

The present application further provides a control device for the vehicle logo device as described above, wherein the device includes:
an operating mode acquisition module, configured to acquire the operating mode of a vehicle;
a determination module, configured to determine whether the operating mode of the vehicle is a first preset mode;
a first control module, configured to control the driving device to drive the connecting member to rotate at a preset speed when the operating mode of the vehicle is the first preset mode, until the connecting member drives the vehicle logo assembly to form a preset angle with the vehicle body, wherein the camera device synchronously forms the preset angle with the vehicle body;
a second control module, configured to control the camera device to start work when the camera device forms the preset angle with the vehicle body.

In one embodiment, the control device further includes:
a third control module, configured to control the camera device to shut down and control the driving device to drive the connecting member to rotate at a preset speed when the operating mode of the vehicle is not the first preset mode, until the connecting member drives the vehicle logo assembly to be in contact with the vehicle body.

The present application further provides a control terminal for a vehicle logo device. The terminal includes a processor and a memory, wherein the memory stores at least one instruction or at least one program, and the at least one instruction or at least one program is loaded and executed by the processor to achieve the control method of the vehicle logo device as described above.

### BRIEF DESCRIPTION OF THE DRAWINGS

In order to more clearly illustrate the vehicle logo device, and the control method, device and terminal for the vehicle logo device of the present application, the following will briefly introduce the accompanying drawings required for the embodiments. It is obvious that the accompanying drawings in the following description are only some embodiments of the present application. For those skilled in the art, other drawings can be obtained based on these drawings without creative work.
FIG. 1 is a structural schematic diagram of the vehicle logo assembly when it is in contact with the vehicle body in the embodiment of the present application;
FIG. 2 is a structural schematic diagram of the vehicle logo assembly when it forms a preset angle in the embodiment of the present application;
FIG. 3 is a structural schematic diagram of the vehicle logo in the embodiment of the present application;
FIG. 4 is a flowchart of the control method for the vehicle logo device in the embodiment of the present application;
FIG. 5 is a structural schematic diagram of the control device for the vehicle logo device in the embodiment of the present application;
FIG. 6 is a structural schematic diagram of the control terminal of the vehicle logo device in the embodiment of the present application.

The reference signs in the figures are as follows:
1-vehicle logo assembly; 101-vehicle logo base; 102-vehicle logo; 1021-LED lamp; 1022-uniform light film; 1023-logo shaped shield; 1024-PVD aluminum plating layer; 2-camera device; 3-connecting member; 4-driving device; 401-driving motor; 402-driving rod.

### DETAILED DESCRIPTION OF THE APPLICATION

The following will provide a clear and complete description of the technical solution in the embodiments of the present application in conjunction with the accompanying drawings. Obviously, the described embodiments are only part of the embodiments of the present application, not all of the embodiments. Based on the embodiments in the present application, all other embodiments obtained by those skilled in the art without creative work shall fall within the scope of protection of the present application.

It should be noted that the terms "first", "second", etc. in the description and claims of the present application, as well as the accompanying drawings, are used to distinguish similar objects, without necessarily describing a specific order or sequence. It should be understood that the data used in this way can be interchanged in appropriate cases, such that the embodiments of the present application described here can be implemented in sequence other than those illustrated or described here. In addition, the terms "include" and "have", as well as any variations thereof, are intended to cover non-exclusive inclusion. For example, a process, method, system, product, or device that includes a series of steps or units, need not be limited to those clearly listed steps or units, but may also include other steps or units that are not clearly listed or inherent to these processes, methods, products, or devices.

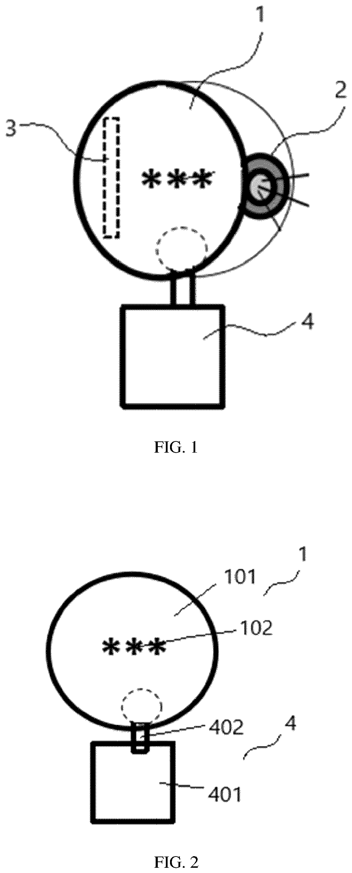

Please refer to FIGs. 1 and 2, FIGs. 1 and 2 are structural schematic diagrams of the vehicle logo device in the present application. Specifically, the present application provides a vehicle logo device including a vehicle logo assembly 1, a camera device 2, a connecting member 3, a driving device 4, and a control device.

The vehicle logo assembly 1 is fixedly connected to the connecting member 3, and the connecting member 3 is rotatably connected to a vehicle body.

The driving device 4 is used to drive the connecting member 3 to rotate, so that the vehicle logo assembly 1 is in contact with the vehicle body or forms a preset angle with the vehicle body.

The camera device 2 is provided on a side surface of the vehicle logo assembly 1 close to the vehicle body, and the camera device 2 rotates synchronously with the vehicle logo assembly 1.

The control device is used to control the driving device 4 to drive the connecting member 3 to rotate or keep stationary.

The control device is also used to control the camera device 2 to start work or shut down.

In the vehicle logo device disclosed in this application, the vehicle logo assembly 1 and the camera device 2 of the vehicle are integrated together, and the camera device 2 and the vehicle logo assembly 1 can rotate to switch positions, so that the camera device 2 can be hidden when not in use, not only the appearance of the vehicle is made more beautiful, but also the camera device 2 is avoided from damage by hiding the camera device 2 when there is no need for use, thereby improving the service life of the camera device 2.

Specifically, an accommodating cavity is provided in the vehicle body corresponding to the position of the vehicle logo assembly 1, and the accommodating cavity is used to accommodate the vehicle logo assembly 1 and the camera device 2.

In the embodiment of this specification, when the driving device 4 controls the connecting member 3 to rotate, if the connecting member 3 drives the vehicle logo assembly 1 to rotate in a direction close to the vehicle body, the control device controls the camera device 2 to shut down, if the connecting member 3 drives the vehicle logo assembly 1 to rotate in a direction away from the vehicle body, the control device controls the camera device 2 to start work.

Specifically, in a preferred embodiment, when the driving device 4 controls the connecting member 3 to rotate until the vehicle logo assembly 1 is in contact with the vehicle body, the control device controls the camera device 2 to shut down.

In another preferred embodiment of this specification, when the driving device 4 controls the connecting member 3 to rotate until the vehicle logo assembly 1 forms a preset angle with the vehicle body, the control device controls the camera device 2 to start work.

Specifically, the preset angle can be 10°-45°, and preferably, the preset angle can be 20°-30°.

In a preferred embodiment, the preset angle can be 25°.

As shown in FIG. 2, specifically, in the embodiment of this specification, the vehicle logo assembly 1 may include a vehicle logo base 101 and a vehicle logo 102 provided on the vehicle logo base 101.

The vehicle logo base 101 is fixedly connected to the connecting member 3.

The driving device 4 is used to drive the connecting member 3 to rotate, so that the vehicle logo base 101 is in contact with the vehicle body or forms a preset angle with the vehicle body.

The camera device 2 is provided on a side surface of the vehicle logo base 101 close to the vehicle body.

Preferably, the vehicle logo 102 can be the logo trademark of the vehicle.

Specifically, as shown in FIG. 2, the vehicle logo base 101 includes an outer side surface and an inner side surface.

The vehicle logo 102 is fixed on the outer side surface of the vehicle logo base 101.

The camera device 2 is fixed on the inner side surface of the vehicle logo base 101, wherein the inner side surface of the vehicle logo base 101 is the side surface close to the vehicle body.

In the embodiment of this specification, the control device is also used to control the vehicle logo assembly 1 to emit light or be turned off.

The vehicle logo assembly 1 can be set on the front, rear, or side of the vehicle body.

In an embodiment of this specification, the vehicle logo 102 can be controlled to emit light when the vehicle is in a shutdown state. This setting not only makes it easier for users to find vehicles, but also makes the vehicle more beautiful.

Specifically, when the vehicle is in a shutdown state, the vehicle logo 102 of the vehicle logo assembly 1 located in front of the vehicle body can emit, but not limited to, white light; the vehicle logo 102 of the vehicle logo assembly 1 located in the rear of the vehicle body can emit, but not limited to, red light; the vehicle logo 102 of the vehicle logo assembly 1 located on the side of the vehicle body can emit, but not limited to, yellow or white light.

In another embodiment of this specification, the vehicle logo 102 can be controlled to emit light or be turned off when the vehicle is in a started or activated state. This setting not only facilitates the operation of the camera device, but also makes the vehicle more beautiful.

Specifically, when the vehicle is in a started or activated state, the vehicle logo 102 of the vehicle logo assembly 1 located in front of the vehicle body can emit, but not limited to, white light; the vehicle logo 102 of the vehicle logo assembly 1 located in the rear of the vehicle body can emit, but not limited to, red light; the vehicle logo 102 of the vehicle logo assembly 1 located on the side of the vehicle body can emit, but not limited to, yellow light.

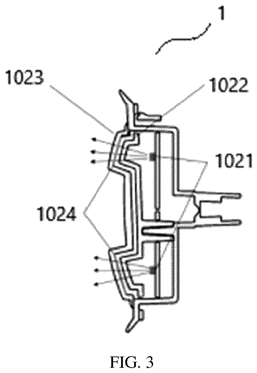

Specifically, as shown in FIG. 3, in the embodiment of this specification, the vehicle logo 102 includes an LED lamp 1021, a uniform light film 1022 covering the LED lamp 1021, and a logo shaped shield 1023 covering the uniform light film 1022. In this application, after the light emitted by the LED lamp 1021 passes through the uniform light film 1022, the light becomes more uniform.

Specifically, the control device can control the LED lamp 1021 to emit light or be turned off. The light passes through the uniform light film 1022, causing the logo shaped shield 1023 to be illuminated, thereby causing the vehicle logo 102 of the vehicle logo assembly 1 to emit light or be turned off.

Preferably, the logo shaped shield 1023 is a transparent shield.

Specifically, luminescence can include normal luminescence and gradient luminescence; gradient luminescence can include gradually brightening luminescence, gradually extinguishing luminescence, and interval luminescence; interval luminescence can be emitted once every interval of time.

The inner surface of the logo shaped shield 1023 is provided with a PVD aluminum plating layer 1024 or a silver film. The provided PVD aluminum plating layer 1024 or silver film can maintain the bright aluminum metal color when the vehicle logo is turned off.

Specifically, the silver film can be injection molded in an IMD mold.

Preferably, in the embodiment of this specification, as shown in FIG. 2, the connecting member 3 is a connecting bracket, one end of the connecting bracket is rotatably connected to the vehicle body, and the other end of the connecting bracket is fixedly connected to the vehicle logo assembly 1.

As shown in FIG. 2, the driving device 4 includes a driving motor 401 and a driving rod 402 fixed to the driving motor 401.

The driving rod 402 is fixedly connected to one end of the connecting member.

The driving motor 401 drives the connecting member 3 to rotate through the driving rod 402.

The embodiment of this application also provides a vehicle, including an accommodating cavity and a vehicle logo device arranged in the accommodating cavity, wherein the vehicle logo device is the above-mentioned vehicle logo device.

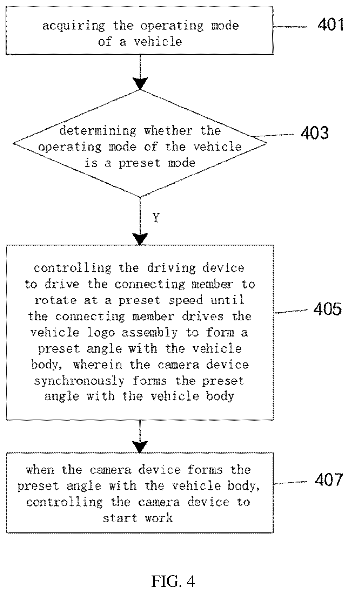

The control method of this application based on the above vehicle logo device is described below with reference to FIG. 4, which can be applied to vehicle logo devices on pure electric vehicles, hybrid electric vehicles and other vehicles.

Please refer to FIG. 4, which is a flowchart of the control method for a vehicle logo device in the embodiment of this application. This specification provides the operation steps as described in the embodiment or the flowchart, but based on common sense or non-creative work, the control method can include more or fewer operational steps. The sequence of the operational steps listed in the embodiment is only one of the numerous execution sequences and does not represent the unique execution sequence. The control method of the vehicle logo device can be executed in the sequence shown in the embodiment or the drawings. Specifically, as shown in FIG. 4, the method includes:
S401, acquiring the operating mode of a vehicle;
It should be noted that in the embodiment of this specification, acquiring the operating mode of the vehicle can include the following steps:
   A1, acquiring status data and real-time speed of the vehicle, wherein the status data can include, but is not limited to, the vehicle being in a started state or the vehicle being in a shutdown state.

Specifically, in a fuel powered vehicle, when the engine of the vehicle is in a started state, that is, after the engine ignition is successful, it can be considered that the vehicle is in a started state. When the engine is in a shutdown state, it can be considered that the vehicle is in a shutdown state.

A2, determining the operating mode of the vehicle based on the status data and/or the real-time speed of the vehicle.

S403, determining whether the operating mode of the vehicle is a first preset mode;
In the embodiment of this specification, the first preset mode can be the vehicle in a started state or in a driving state.

Specifically, when the engine of the vehicle is in the started state or the real-time speed of the vehicle is not equal to 0, it can be determined that the vehicle is in the first preset mode.

S405, when the operating mode of the vehicle is the first preset mode, controlling the driving device to drive the connecting member to rotate at a preset speed until the connecting member drives the vehicle logo assembly to form a preset angle with the vehicle body, wherein the camera device synchronously forms the preset angle with the vehicle body.

In the embodiment of this specification, the preset speed at which the driving device drives the connecting member to rotate can be a fixed speed; specifically, the preset speed can be 0.10 mm/s-0.14 mm/s.

Preferably, the preset speed can be 0.12 mm/s.

In the embodiment of this specification, during the process of the driving device driving the connecting member to rotate, the connecting member can drive the vehicle logo assembly to rotate synchronously until the vehicle logo assembly forms the preset angle with the vehicle body and then stops rotating.

The camera device is fixed on the vehicle logo assembly, and the camera device can rotate synchronously with the vehicle logo assembly, so that the camera device synchronously forms the preset angle with the vehicle body.

In the embodiment of this specification, when the operating mode of the vehicle is the first preset mode, the vehicle logo 102 can be controlled to emit light or be turned off. This setting not only facilitates the operation of the camera device, but also makes the vehicle more beautiful.

Specifically, when the operating mode of the vehicle is the first preset mode, the vehicle logo 102 of the vehicle logo assembly 1 located in front of the vehicle body can be controlled to emit, but not limited to, white light; the vehicle logo 102 of the vehicle logo assembly 1 located in the rear of the vehicle body can be controlled to emit, but not limited to, red light; and the vehicle logo 102 of the vehicle logo assembly 1 located on the side of the vehicle body can be controlled to emit, but not limited to, yellow light.

S407, when the camera device forms the preset angle with the vehicle body, controlling the camera device to start work.

In the embodiment of this specification, the preset angle can be 10°-45°; preferably, the preset angle can be 20°-30°.

In a preferred embodiment, the preset angle can be 25°; that is, when the camera device forms an angle of 25° with the vehicle body, the camera device is controlled to start work.

Specifically, the camera device can be a camera; and the preset angle can be determined based on the specifications of the camera device and the vehicle logo.

Specifically, the preset angle formed by the camera device with the vehicle body does not affect the working angle of the camera device.

The working angle of the camera device can form an angle range of 30°-120° with the central axis of the camera device; preferably, the formed angle can be 60°.

The specifications of the camera device can include lens size and imaging angle range of the camera.

Specifically, when the specifications of the camera device are determined, the larger the size of the vehicle logo, the smaller the preset angle.

In the embodiment of this specification, when the operating mode of the vehicle is not the first preset mode, the camera device is controlled to shut down, and the driving device is controlled to drive the connecting member to rotate at a preset speed until the connecting member drives the vehicle logo assembly to be in contact with the vehicle body.

In another embodiment of this specification, when the operating mode of the vehicle is not the first preset mode, the vehicle logo assembly is controlled to emit light or be turn off.

Specifically, when the operating mode of the vehicle is not the first preset mode, the vehicle logo 102 can be controlled to emit light. This setting not only makes it easier for users to find vehicles, but also makes the vehicle more beautiful.

Specifically, the operating mode of the vehicle is not the first preset mode, which may be that the vehicle is in a shutdown state. At this time, the vehicle logo 102 of the vehicle logo assembly 1 located in front of the vehicle body can be controlled to emit, but not limited to, white light; the vehicle logo 102 of the vehicle logo assembly 1 located in the rear of the vehicle body can be controlled to emit, but not limited to, red light; and the vehicle logo 102 of the vehicle logo assembly 1 located on the side of the vehicle body can be controlled to emit, but not limited to, yellow or white light.

Specifically, luminescence can include normal luminescence and gradient luminescence; gradient luminescence can include gradually brightening luminescence, gradually extinguishing luminescence, and interval luminescence; interval luminescence can be emitted once every interval of time.

In a preferred embodiment of this specification, the vehicle logo assembly can be controlled to emit light in various scenarios, such as, after locking the vehicle, when approaching the vehicle from a distance until the key is detected, during approaching unlocking, charging, active vehicle searching, etc.

As can be seen from the control method, the terminal and the control terminal for the vehicle logo device provided in the embodiment of the present application, this embodiment of the present application acquires the operating mode of the vehicle, determines whether the operating mode of the vehicle is the first preset mode, and when the operating mode of the vehicle is the first preset mode, controls the driving device to drive the connecting member to rotate at a preset speed until the connecting member drives the vehicle logo assembly to form a preset angle with the vehicle body, wherein the camera device synchronously forms the preset angle with the vehicle body, and when the camera device forms the preset angle with the vehicle body, controls the camera device to start work. By utilizing the technical solution in the embodiment of this specification, the camera device and the vehicle logo assembly which are integrated together can be rotated automatically to switch positions according to the operating mode of the vehicle. This not only increases the automation level and the intelligence of the vehicle, but also the camera device is avoided from damage by hiding the camera device when there is no need for use, thereby improving the service life of the camera device and increasing the vehicle's sense of technology.

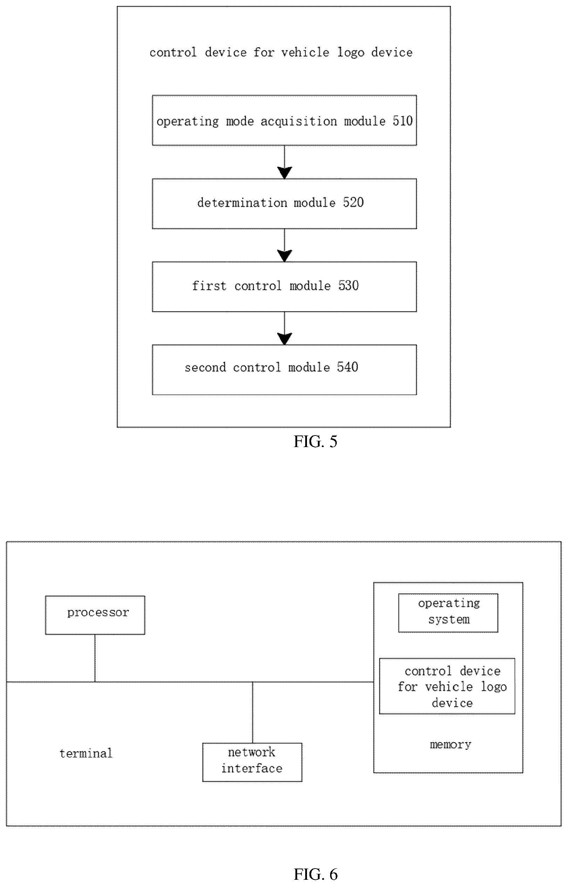

The embodiment of the present application further provides a control device for a vehicle logo device, as shown in FIG. 5, which is a structural schematic diagram of the control device for the vehicle logo device in the embodiment of the present application. Specifically, the device includes:
an operating mode acquisition module 510, configured to acquire the operating mode of a vehicle;
a determination module 520, configured to determine whether the operating mode of the vehicle is a first preset mode;
a first control module 530, configured to control the driving device to drive the connecting member to rotate at a preset speed when the operating mode of the vehicle is the first preset mode, until the connecting member drives the vehicle logo assembly to form a preset angle with the vehicle body, wherein the camera device synchronously forms the preset angle with the vehicle body;
a second control module 540, configured to control the camera device to start work when the camera device forms the preset angle with the vehicle body.

In the embodiments of this specification, the control device further includes:
a third control module, configured to control the camera device to shut down and control the driving device to drive the connecting member to rotate at a preset speed when the operating mode of the vehicle is not the first preset mode, until the connecting member drives the vehicle logo assembly to be in contact with the vehicle body.

In the embodiments of this specification, the control device further includes:
a fourth control module, configured to control the vehicle logo assembly to emit light or be turned off when the operating mode of the vehicle is not the first preset mode.

In the embodiment of this specification, the operating mode acquisition module 510 includes:
an acquisition unit, configured for acquiring status data and real-time speed of the vehicle, wherein the status data includes the vehicle being in a started state or the vehicle being in a shutdown state; and
a determination unit, configured for determining the operating mode of the vehicle based on the status data and/or the real-time speed of the vehicle.

The embodiment of the present application further provides a control terminal for a vehicle logo device. The terminal includes a processor and a memory. The memory stores at least one instruction or at least one program, and the at least one instruction or at least one program is loaded and executed by the processor to achieve the control method of the vehicle logo device as described in the above method embodiment.

The memory can be used to store software programs and modules. The processor executes various functional applications and data processing by running software programs and modules stored in the memory. The memory can mainly include a storage procedure area and a storage data area, wherein the storage procedure area can store operating systems, applications required by functions, etc. The storage data area can store data created based on the use of the device, etc. In addition, the memory can include high-speed random-access memory, and can also include non-volatile memory, such as at least one disk storage device, flash memory device, or other volatile solid-state storage devices. Correspondingly, the memory can also include a memory controller to provide access to the processor to visit the memory.

FIG. 6 is a structural schematic diagram of a parking terminal in the embodiment of the present application. The internal structure of the parking terminal may include but is not limited to: a processor, a network interface, and a memory. The processor, the network interface and the memory inside the parking terminal can be connected through a bus or other means. In the embodiment of this specification, FIG. 6 takes bus connection as an example.

Specifically, the processor (also known as the central processing unit) is the computing and control core of the parking terminal. The network interface can optionally include standard wired interface, wireless interface (such as WI-FI, mobile communication interface, etc.). The memory is a memory device in the parking terminal used to store programs and data. It can be understood that the memory here can be a high-speed RAM storage device or a non-volatile memory device, such as at least one disk storage device, or optionally, at least one storage device located far from the above-mentioned processor. The memory provides storage space, and the storage space stores the operating system of the parking terminal, including but not limited to: Windows system (an operating system), Linux (an operating system), etc., it is not limited in this application. Moreover, the storage space also stores one or more instructions suitable for being loaded and executed by the processor, and these instructions can be one or more computer programs (including program code). In the embodiment of this specification, the processor loads and executes one or more instructions stored in the memory to achieve the control method of the vehicle logo device provided by the above method embodiment.

The embodiment of this application also provides a computer-readable storage medium, and the storage medium can be arranged in the parking terminal to store at least one instruction, at least one program, code set or instruction set related to the control method of a vehicle logo device in the above method embodiment. The at least one instruction, at least one program, code set or instruction set can be loaded and executed by the processor of the electronic device to implement the control method of the vehicle logo device provided in the above method embodiment.

Optionally, in this embodiment, the above storage medium can include, but are not limited to, various mediums that can store procedure codes, such as U disk, ROM, random-access memory, portable storage device, magnetic disk or optical disk.

It should be noted that the order of the embodiments in this application is only for description and does not represent the advantages or disadvantages of the embodiments. The above describes specific embodiments of this specification. Other embodiments are within the scope of the appended claims. In some cases, the actions or steps recited in the claims may be executed in a different order than in the embodiments and still achieve the desired results. In addition, the process depicted in the accompanying drawings does not necessarily require a specific sequence or a continuous sequence to achieve the desired results. In some embodiments, multitasking and parallel processing are also possible or may be advantageous.

The various embodiments in this specification are described in a progressive manner, and the same and similar parts between the various embodiment can be referred to each other. Each embodiment focuses on the differences from other embodiments. Especially for the device and server embodiments, as they are basically similar to the method embodiments, the description is relatively simple, and relevant details can refer to the explanation of the method embodiments.

The ordinary technical persons in this field can understand that all or part of the steps to implement the above embodiments can be completed through hardware, or by instructing relevant hardware through programs. The programs can be stored in a computer-readable storage medium, and the storage medium can be read-only memory, magnetic disk, or optical disk, etc.

The above disclosure are only preferred embodiments of this application, and of course, it cannot be used to limit the scope of this application. Therefore, the equivalent changes made according to the claims of this application still fall within the scope of this application.

## Claims

1. A vehicle logo device comprising a vehicle logo assembly (1), a camera device (2), a connecting member (3), a driving device (4), and a control device;
wherein the vehicle logo assembly (1) is fixedly connected to the connecting member (3), and the connecting member (3) is rotatably connected to a vehicle body;
the driving device (4) is configured to drive the connecting member (3) to rotate, such that the vehicle logo assembly (1) is in contact with the vehicle body or forms a preset angle with the vehicle body;
the camera device (2) is provided on a side surface of the vehicle logo assembly (1) close to the vehicle body, and the camera device (2) rotates synchronously with the vehicle logo assembly (1);
the control device is configured to control the driving device (4) to drive the connecting member (3) to rotate or keep stationary;
the control device is also configured to control the camera device (2) to start work or shut down.

2. The vehicle logo device as claimed in claim **1,** wherein when the driving device (4) controls the connecting member (3) to rotate until the vehicle logo assembly (1) is in contact with the vehicle body, the control device controls the camera device (2) to shut down;
when the driving device (4) controls the connecting member (3) to rotate until the vehicle logo assembly (1) forms a preset angle with the vehicle body, the control device controls the camera device (2) to start work.

3. The vehicle logo device as claimed in claim **1,** wherein the vehicle logo assembly (1) comprises a vehicle logo base (101) and a vehicle logo (102) arranged on the vehicle logo base (101);
the vehicle logo base (101) is fixedly connected to the connecting member (3);
the driving device (4) is configured to drive the connecting member (3) to rotate, such that the vehicle logo base (101) is in contact with the vehicle body or forms a preset angle with the vehicle body;
the camera device (2) is provided on a side surface of the vehicle logo base (101) close to the vehicle body.

4. The vehicle logo device as claimed in claim **3,** wherein the vehicle logo base (101) comprises an outer side surface and an inner side surface;
the vehicle logo (102) is fixed on the outer side surface of the vehicle logo base (101);
the camera device (2) is fixed on the inner side surface of the vehicle logo base (101).

5. The vehicle logo device as claimed in claim **3,** wherein the vehicle logo (102) comprises an LED lamp (1021), a uniform light film (1022) covering the LED lamp (1021), and a logo shaped shield (1023) covering the uniform light film (1022);
an inner surface of the logo shaped shield (1023) is provided with a PVD aluminum plating layer (1024) or a silver film.

6. The vehicle logo device as claimed in claim **1,** wherein the connecting member (3) is a connecting bracket, one end of the connecting bracket is rotatably connected to the vehicle body, and the other end of the connecting bracket is fixedly connected to the vehicle logo assembly (1).

7. The vehicle logo device as claimed in claim **1** or **6,** wherein the driving device (4) comprises a driving motor (401) and a driving rod (402) fixed to the driving motor (401);
the driving motor (401) drives the connecting member (3) to rotate through the driving rod (402).

8. The vehicle logo device as claimed in claim **1,** wherein the preset angle is 10°-45°.

9. The vehicle logo device as claimed in claim **1,** wherein the control device is also configured to control the vehicle logo assembly (1) to emit light or be turned off.

10. A control method for the vehicle logo device as claimed in any one of claims **1** to **9,** wherein the method comprises:
acquiring the operating mode of a vehicle;
determining whether the operating mode of the vehicle is a first preset mode;
when the operating mode of the vehicle is the first preset mode, controlling the driving device to drive the connecting member to rotate at a preset speed until the connecting member drives the vehicle logo assembly to form a preset angle with the vehicle body, wherein the camera device synchronously forms the preset angle with the vehicle body;
when the camera device forms the preset angle with the vehicle body, controlling the camera device to start work.

11. The control method of the vehicle logo device as claimed in claim **10,** further comprising:
when the operating mode of the vehicle is not the first preset mode, controlling the camera device to shut down and controlling the driving device to drive the connecting member to rotate at the preset speed until the connecting member drives the vehicle logo assembly to be in contact with the vehicle body.

12. The control method of the vehicle logo device as claimed in claim **11,** further comprising:
when the operating mode of the vehicle is not the first preset mode, controlling the vehicle logo assembly to emit light or be turned off.

13. The control method of the vehicle logo device as claimed in claim **10** or **11,** wherein when the driving device drives the connecting member to rotate at the preset speed, the preset speed is 0.05 mm/s-1 mm/s.

14. The control method of the vehicle logo device as claimed in claim **10,** wherein said acquiring the operating mode of the vehicle comprises:
acquiring status data and real-time speed of the vehicle, wherein the status data comprises the vehicle being in a started state or the vehicle being in a shutdown state;
determining the operating mode of the vehicle based on the status data and/or the real-time speed of the vehicle.

15. The control method of the vehicle logo device as claimed in claim **10,** wherein the preset angle is 10°-45°.

16. A control device for the vehicle logo device as claimed in any one of claims **1-9,** wherein the device comprises:
an operating mode acquisition module, configured to acquire the operating mode of a vehicle;
a determination module, configured to determine whether the operating mode of the vehicle is a first preset mode;
a first control module, configured to control the driving device to drive the connecting member to rotate at a preset speed when the operating mode of the vehicle is the first preset mode, until the connecting member drives the vehicle logo assembly to form a preset angle with the vehicle body, wherein the camera device synchronously forms the preset angle with the vehicle body;
a second control module, configured to control the camera device to start work when the camera device forms the preset angle with the vehicle body.

17. The control device of the vehicle logo device as claimed in claim **16,** further comprising:
a third control module, configured to control the camera device to shut down and control the driving device to drive the connecting member to rotate at a preset speed when the operating mode of the vehicle is not the first preset mode, until the connecting member drives the vehicle logo assembly to be in contact with the vehicle body.

18. A control terminal for a vehicle logo device comprising a processor and a memory, wherein the memory stores at least one instruction or at least one program, and the at least one instruction or at least one program is loaded and executed by the processor to achieve the control method of the vehicle logo device as claimed in any one of claims **10** to **15.**
